# EUROPEAN PATENT APPLICATION

(11) **EP 2 255 670 A1**
(43) Date of publication of application: **01.12.2010**
(21) Application number: 09007114.3
(22) Date of filing: 28.05.2009
(51) Int. Cl.: A23G 9/08, A23G 9/22, A23G 9/26

(54) **Process and apparatus for producing frozen confections**

(71) Applicant: Tiesnitsch Beheer B.V., 6573 GB Beek Ubbergen (NL)
(72) Inventor: Tiesnitsch, Johannes Ijsbrand, 6573 GB Beek Ubbergen (NL); Martens, Johannes Cornelis Antonius, 6573 GB Beek Ubbergen (NL)

(57) **Abstract**

Process for producing multi-layer frozen confections, comprising the steps of
a) filling a mold, having a mold bottom, mold walls and an open mould top, with the substance to be frozen;
b) freezing said substance into a frozen confection;
c) releasing said frozen confection from the mold;

characterized In that the mold is filled through at least one opening In the mold walls or the mold bottom and apparatus for producing frozen confections.

## Description

The invention relates to a process and apparatus for producing frozen confections.

Such process is known from US Patent 2,123,215. The process applied there comprises filling a mold from the top consecutively with two substances to be frozen.

The known method has as a disadvantage that the filling of the molds from the top brings about extensive contact of the substance with air. This may cause oxidation, In particular when the substance is a fruit juice. Volatile components, which to a large extent contribute to the flavour and odor of the confection, may escape from the substance. These mechanisms may cause degradation in hygiene, flavour and appearance of the substance to be frozen during the filling process.

Aim of the present invention is to provide a method to produce frozen confections that prevents this degradation of the substance at least to a large extent.

This aim is achieved in that the process for producing frozen confections, comprises the steps of
a. filling a mold, having a mold bottom, mold walls and an open mould top, with the substance to be frozen;
b. freezing said substance into a frozen confection;
c. releasing said frozen confection from the mold;
characterized In that the mold is filled through at least one opening in the mold walls or the mold bottom.

Filling the mold through an opening in the mold walls or bottom minimizes contact of the substance with air and thus minimizes the occurrence of the degradation mechanisms that occur in the known process.

Filling the mold through one or more openings in the bottom has the advantage that only small part of the substances comes into contact with the environment, viz, only over their top surface area In the mold.

Filling the mold through one or more openings in the walls, i.e. closer to the top end of the mold, is also possible. In that case the openings preferably are positioned in the wall below the top level the substance will have after filling the mould. Contact of the substances with the environment may be more extensive, though still significantly restricted compared to the known process. Contact with surrounding air may be even further restricted by applying an inert gas blanket at the open top ends of the molds. The inert gas preferably is nitrogen.

The opening In the walls or bottom can be connected to a duct system coming from containers containing the substance applying a suitable dosing system. Dosing systems for fluid substances, comprising e.g. pumps, ducts and valves, are known per se and can be used in the process according to the invention.

Molds applicable in the process according to the invention have a bottom and walls and an open top end. The bottom is understood to be the part of the mold opposite to the open top end, whereas the walls extend from the bottom to the open top end, the bottom and walls forming a cavity of a desired shape having an open top end.

The mold is filled with an amount of the substance to be frozen. This substance preferably is in fluid form. It may contain small particles like fruit fibers or pulp or particles found in pressed fruit juice. If such particles are present the dimensions of the dosing ducts and the filling openings will be chosen to prevent clogging thereof by the particles. The mold may be filled with one fluid substance or with more than one fluid substance to obtain a mixed muiti-substance confection. The total amount corresponds with the desired size of the confection. The substance is frozen then by cooling the mold, e.g. by a cooling substance surrounding the outer side of the mold. It is also possible for the mold to contain cooling liquid ducts through which cooling liquid is flowing. Also other known techniques for freezing from the outside an amount of liquid In a mold can be applied in the process according to the invention. The mold preferably is made of a highly heat conductive material, e.g. a metal.

The substance In the mold thus freezes to a frozen confection consisting of the substance. Said frozen confection then is released from the mold. To this end the cooling of the mold will be stopped. To shorten release time and to avoid damage when lifting the frozen confection from the mold in which it has been frozen, It may be advantageous to heat the mould bottom and/or walls for a short time, thus loosening the frozen confection from the mold. To this end heating means, e.g. electric heating wiring or heating fluid ducts may be present in the mold bottom and/or walls.

The form of the mold should be such that by moving a frozen piece in the mold In an upward direction, i.e. in a direction from the bottom to the top end, room between the confection and the mold walls is formed over at least part of the surface of the frozen part in order to prevent a vacuum to occur in a cavity between the frozen part and the mold bottom and to allow air to escape from that cavity when the mold is filled. Preferably the area of the cross section of the mold normal to the direction from bottom to open top end increases from bottom to top end. More preferably the mold has a conical form. Lifting the frozen confection then creates room everywhere between the confection and the bottom and walls of the mould.

Preferably a peg is positioned in the mold extending into the substance to be frozen. This peg allows easy removal of the frozen confection and also makes consumption of the confection more comfortable. The peg can be positioned before, during or after the introduction of the substance in the mold. One of the peg's ends will extend Into the substance before this is completely frozen.

Preferably in the process according to the invention a number of equal molds are filled at the same time from a common substance duct connected to the openings In the mold bottoms or walls. When the fill openings are present in the mold walls their position must be below the upper substance level reached after filling the molds. Only in that case the advantages of easy and accurate dosing and achieving equal substance levels in all molds as described below will be achieved. To the same end the mold bottoms will be positioned in one horizontal plane.

This filling of all molds through one duct increases productivity considerably. Since the openings are in the bottom or In the mold walls it also has the advantage of easier and more accurate dosing of the substances to a number of molds at the same time, with greater accuracy and less difference between the mold fillings. By introducing the preferably fluid substances from the bottom, gravity and hydrostatic pressure guarantee the same surface level of the substance In each mold, so equal amounts of substance in each mold, assumed that all molds filled In one and the same step are equal as they will be in practice. Further, the amount of substance to be Introduced does not have to be adjusted for each mold separately but only the total amount to fill all the molds that are filled at the same time. Thus any inaccuracy in this amount will be divided over the total number of molds, whereas In the known method each mold will have such inaccuracy separately. Also differences In mold volumes will not lead to differences in the filling level between the molds. Thus the process according to the invention requires less complex dosing installations and equal and accurate filling of all the molds is easily obtained.

The process according to the invention can be used to produce confections from any kind of freezable substances. Examples of these are fruit juices, sherbets, water-ice, ice cream and other edible, tasty water-containing and In general fluid substances. The viscosity of the substances in combination with the dimensions of the dosing system must allow it to be transported from e.g. a storage container to and into the molds in a desired time by the transport means applied. The skilled person will recognize that the allowable viscosity will depend on e.g. pump capacity, dimension of transport ducts and mold and filling openings dimensions. This allowable viscosity can be established by routine tests In a given equipment. Also the presence of particles in the fluid, as mentioned before, will require adapted equipment.

The invention further relates to an apparatus for producing multi-layer frozen confections comprising at least one set of molds each having a mold bottom, mold walls and an open mold top, the mold bottoms being positioned in one plane, the molds extending from that plane and each mold having at least one fill opening in its walls or bottom, the opening being connected to a common duct system connectable to at least one storage tank for fluid substances, the apparatus further comprising means for cooling the molds to form pieces of frozen substance in the molds, preferably also means for heating the molds, and means for taking pieces of frozen substance from the mold.

The apparatus comprises at Least one set of molds. The molds preferably are made of a highly heat conductive material. Material having a shape memory may have the advantage that release of frozen parts from the mold can be fast and simple, e.g. by applying an electrical voltage or current to the mold. The number of molds may vary. The larger the number of molds in a set, the more economical the production of frozen confections as a larger number can be produced in one run. The molds are constructed as described above, having a bottom, walls and an open mold top allowing frozen contents to be removed from the mold.

The molds are positioned with respect to each other such that the bottoms of the molds are lying in one plane. The molds extend from that plane in a substantially normal direction to that plane. Under production conditions this plane will be positioned horizontally, the open top end of the molds facing upwards and accordingly the molds will extend vertically from the bottom plane.

The molds have a fill opening in their bottom part or In the wall part. The fill openings are connected to a common duct. Rigid or flexible connection pipes running from each opening to the common duct can establish such connection. Preferably these connection pipes are not unnecessary long so as to keep their volume low. This allows filling all the molds in one run through only one duct. The advantages of accuracy and simplicity of such filling system in practice have been described above In the description of the process and are brought about by the chosen construction of the apparatus.

A further constructional advantage of having the filling system connected to the mold bottom or walls, rather than having a system for filling the molds from the top, resides In that the open top end of the molds remain accessible for positioning pegs into the mold and for removing the frozen objects from the mold, without having to move or remove a filling system hanging above the molds first.

The common duct system is connectable to at least one storage tank for fluid substances. Preferably the apparatus comprises means for dosing an amount of substance from each storage tank to the set of moulds. Such dosing means for fluid substances are known in the art. For transporting a substance from a tank to a common duct, known transporting means like a pump will be required and valve means to establish and close off the connection between a tank and the common duct, allowing feeding alternating a different desired substance to the molds. Proper construction and running such transport and dosing systems are common and known techniques in the art.

The apparatus further comprises means for taking pieces of frozen substance from the molds. In practice this will be in an upward direction after these pieces have been formed In the molds after cooling. These means can also be applied for positioning pegs into the molds.

The construction of such means is common in the art and they usually are systems of pneumatic or hydraulic nature and provide functions like grabbing, holding and moving, rotating or positioning and releasing objects.

In the new apparatus the means will allow grabbing and positioning pegs into the molds and, by grabbing the same pegs, moving frozen substances in a vertical direction to allow removing the frozen confections from the molds for further handling like packaging. Systems for this further handling are known in the art and do not form part of this invention.

In the embodiment with one set of molds the shape of the molds is that of a desired frozen confection.

The substance introduced into a mold must be frozen. Means and techniques for cooling the type of molds concerned are known per se. Contacting the molds with a low temperature liquid, e.g. by immersing the molds in a freezing liquid or spaying the outer side of the molds with a freezing substance, is a common technique that can be combined with the apparatus of the invention. However, preferably the molds itself comprise means for cooling. Preferably these means comprise cooling medium ducts or a closed cooling medium plenum, into which the molds extend, allowing a cooling medium to contact the mold walls and bottom. The cooling ducts can be running along the outer side of the molds or the molds can be double-walled, cooling medium flowing between the walls. The molds preferably are made of a highly heat conductive material, e.g. a metal.

The inner surface of the molds can be coated to prevent the pieces of frozen substance to become fixed frozen to the inner surface. Without such coating, and even with it, pieces of frozen substance may be expected to at least locally stick to the wall. To avoid damaging the frozen confections when lifting or removing these, their outer surface must become loose from the mold walls and bottom. In practice this requires the local temperature to be above the freezing point of the substance. In order to promote a fast release of the pieces from the molds heating can be applied to the molds in an analogous way as described above for cooling. To this end the apparatus preferably comprises also means for heating the molds. Heating can be applied using a separate duct system but preferably the same duct system as for the cooling is used for heating the molds. To this end the apparatus then further contains proper valve systems to alternating connecting a heating medium and a cooling medium to the part of the ducts in contact with mold walls and bottom.

Cooling and heating medium are provided by external sources that are known per se.

The apparatus according to the invention allows economically feasible production of frozen confections having improved hygienic quality, flavour and appearance. It is particularly fit to carry out the process of the invention as described above.

## Claims

1. Process for producing frozen confections, comprising the steps of
a) filling a mold, having a mold bottom, mold walls and an open mould top, with the substance to be frozen;
b) freezing said substance into a frozen confection;
c) releasing said frozen confection from the mold;
**characterized in that** the mold is filled through at least one opening in the mold walls or the mold bottom.

2. Process according to claim 1, wherein before or during step b) a peg is positioned in the mold extending into the substance to be frozen.

3. Process according to claim 1 or 2, wherein a number of molds are filled at the same time from a common substance duct connected to the openings in the mold walls or bottom.

4. Apparatus for producing frozen confections comprising at least one set of molds each having a mold bottom, mold walls and an open mold top, the mold bottoms being positioned in one plane, the molds extending from that plane and each mold having at least one fill opening in its walls or bottom, the opening being connected to a common duct system connectable to at least one storage tank for fluid substances, the apparatus further comprising means for cooling the molds to form pieces of frozen substance in the molds, and means for taking pieces of frozen substance from the mold.

5. Apparatus according to claim 4, further comprising means for dosing an amount of substance from each storage tank to the at least one set of moulds

6. Apparatus according to claim 4 or 5, further comprising means to heat the molds.
